# EUROPÄISCHE PATENTSCHRIFT

(11) **EP 0 914 979 B1**
(45) Veröffentlichungstag und Bekanntmachung des Hinweises auf die Patenterteilung: **19.10.2005**
(21) Anmeldenummer: 98115044.4
(22) Anmeldetag: 11.08.1998
(51) Int. Cl.: B60H 1/00

(54) **Bedieneinheit zum Einstellen von Heizungs-, Klima- und/oder Lüftungsanlagen in Kraftfahrzeugen**
Control unit for adjusting the heating, air conditioning and/or ventilation apparatus in motor vehicles
Unité de commande pour le réglage des installations de chauffage, de conditionnement d'air et/ou de ventilation des véhicules automobiles

(30) Priorität: 07.11.1997 DE 19749214
(43) Veröffentlichungstag der Anmeldung: 12.05.1999
(73) Patentinhaber: Preh GmbH, 97616 Bad Neustadt a.d. Saale (DE)
(72) Erfinder: Bauer, Karl-Heinz, 97616 Bad Neustadt (DE); Voll, Walter, 97657 Sandberg (DE); Storath, Joachim, 97616 Salz (DE)
(74) Vertreter: Dietrich, Barbara

(56) Entgegenhaltungen:
- EP-A- 0 149 397
- EP-A- 0 457 935
- DE-A- 2 557 077
- DE-C- 3 936 776

## Beschreibung

Die Erfindung betrifft eine Bedieneinheit zum Einstellen von Heizungs-, Klima- und/oder Lüftungsanlagen in Kraftfahrzeugen nach dem Oberbegriff des Patentanspruchs 1.

Derartige Bedieneinheiten sind beispielsweise aus EP-A-149397 bekannt und werden häufig in ein Armaturenbrett der Kraftfahrzeuge eingesetzt und dienen zur Verstellung von Verteilerklappen von Auslaßleitungen für kühle oder warme Luft mittels sogenannter Bowdenzüge.

Aus der DE 34 34 302 C3 ist eine weitere Bedieneinheit bekannt und besteht dort aus einem in ein Armaturenbrett einsetzbaren Grundkörper mit einer Frontplatte, in der ein oder mehrere Drehknöpfe gelagert sind, die jeweils ein erstes Kegelrad drehen, das auf ein zweites Kegelrad einwirkt, wobei beide Kegelräder ein Kegelradgetriebe mit senkrecht aufeinanderstehenden Drehachsen bilden.

Die jeweils zweiten Kegelräder weisen ein oder mehrere Führungsnuten für die Mitnahme von Stellhebeln auf, die andererseits mit den Bowdenzügen zusammenwirken.

Bei den Stellhebeln handelt es sich hier um einarmige Hebel, die an einem Ende mit einem Drehzapfen in einem Drehlager des Grundkörpers eingesetzt sind und an dem anderen Ende den eingehängten Bowdenzug tragen und dazwischenliegend einen Führungszapfen, der in die Führungsnut des zweiten Kegelrades eingreift.

Obwohl diese Bedieneinheiten nach dem Stand der Technik bereits zufriedenstellend arbeiten, besteht doch Bedarf nach einer Ausführung, die platzsparender, einfacher und billiger herstellbar ist und darüber hinaus verbessert funktioniert.

Es ist daher Aufgabe der Erfindung, eine Bedieneinheit gemäß Oberbegriff des Patentanspruchs 1 derart zu gestalten, daß diese bei weniger Platzbedarf einfacher und billiger herstellbar ist und eine verbesserte Funktion aufweist.

Diese Aufgabe ist durch die im Kennzeichen des Patentanspruchs 1 angegebenen Merkmale gelöst worden. Vorteilhafte Weiterbildungen sind mit den Unteransprüchen angegeben.

Ein erfindungsgemäßes Bedienelement ist in der Zeichnung dargestellt und wird nachfolgend beschrieben.

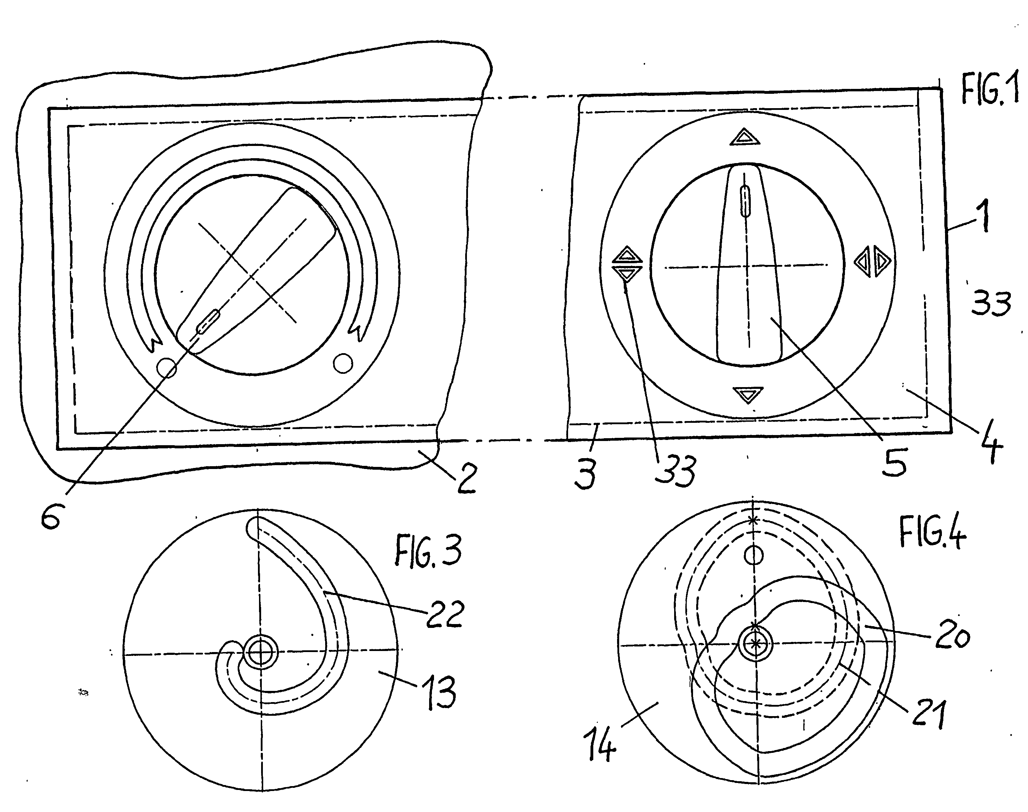

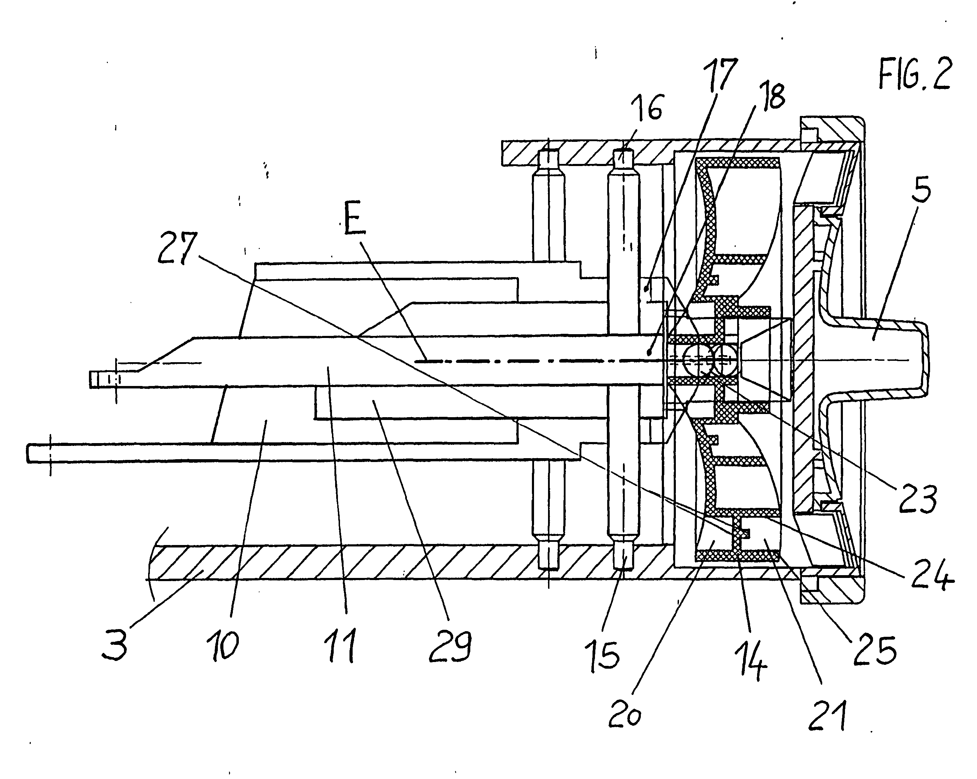

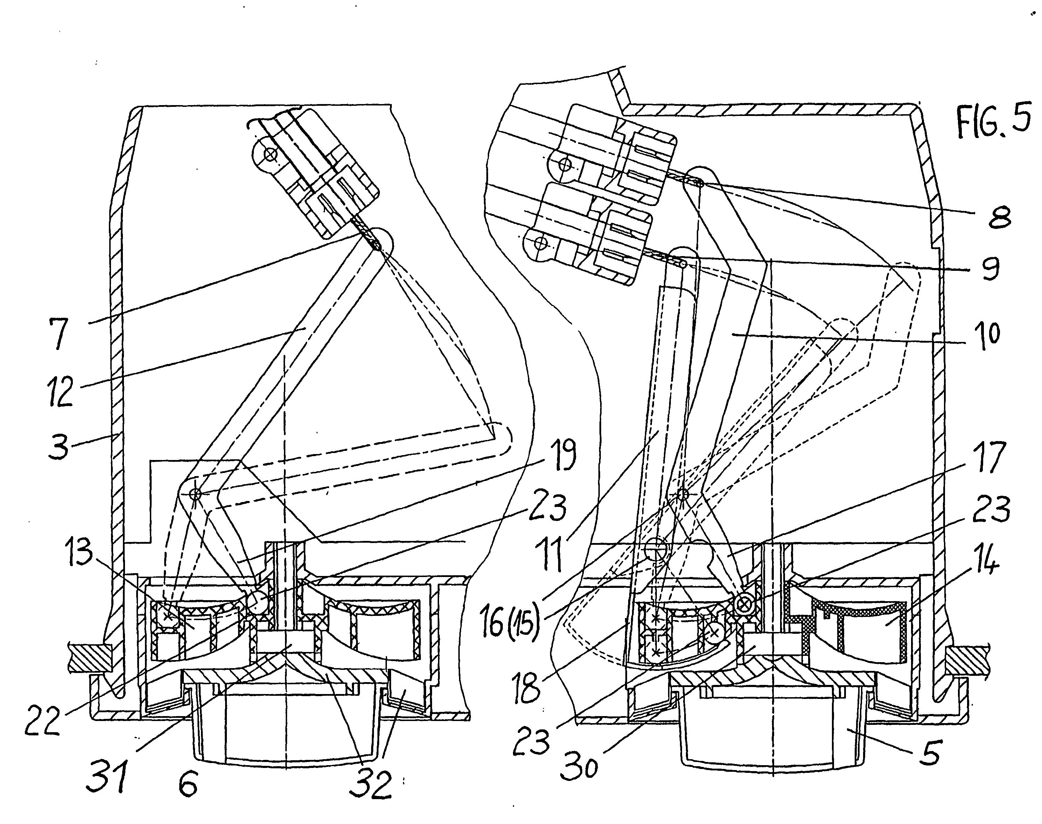

Die Zeichnung zeigt:
**Fig. 1**
   eine Ansicht einer Frontplatte eines Bedienelements in einem Armaturenbrett,
**Fig. 2**
   einen Schnitt durch einen rechten Drehknopf aus Fig. 1,
**Fig. 3 und 4**
   Ansichten von Kurvenrädern des Bedienelements nach Fig. 1,
**Fig. 5**
   einen Schnitt durch das Bedienelement der Fig. 1 über die Drehknopfmitten,
**Fig. 6**
   eine vereinfachte, schematische Darstellung des rechten Teils der Fig. 5.

Fig. 1 zeigt die Ansicht einer Bedieneinheit 1 zum Einstellen von Heizungs-, Klima- und/oder Lüftungsanlagen in Kraftfahrzeugen, bestehend aus einem in ein Armaturenbrett 2 einsetzbaren Grundkörper 3 mit einer Frontplatte 4, in der ein oder mehrere Drehknöpfe 5, 6 gelagert sind.

Diese Drehknöpfe 5, 6 ermöglichen bei Drehung eine Verstellung von mit Bowdenzügen 7, 8, 9 verbundenen Stellhebeln 10, 11, 12 (Fig. 5), wobei jeder Stellhebel 10, 11, 12 im Grundkörper 3 drehbar gelagert und mit einem Führungszapfen in einer Führungsnut eines Kurvenrades geführt ist, wie später anhand der weiteren Figuren noch erläutert wird.

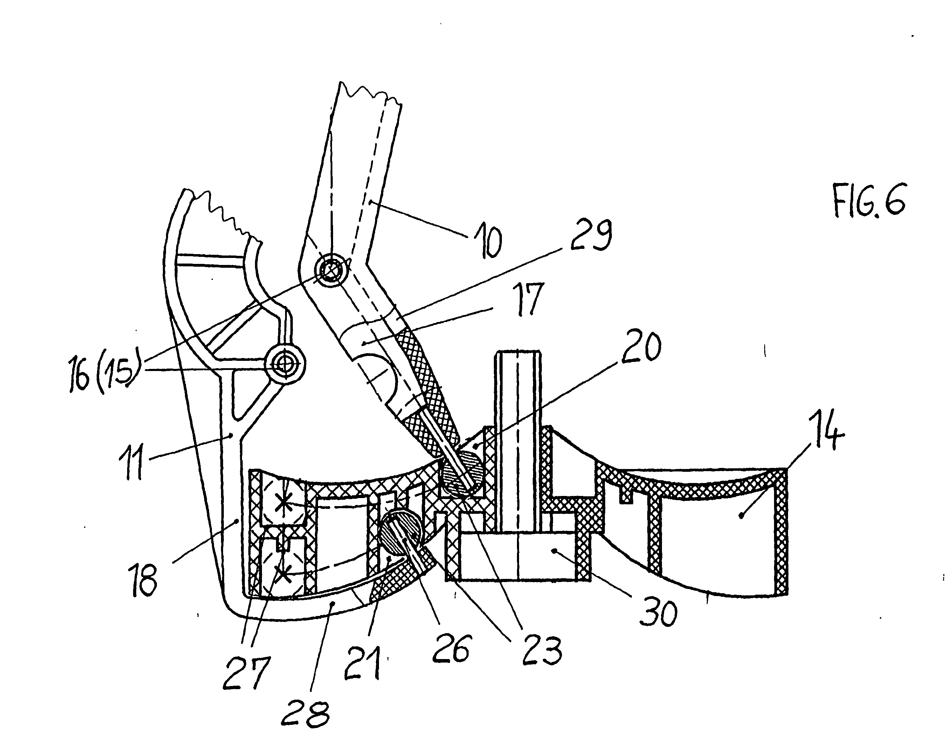

Fig. 2 zeigt einen Schnitt durch den rechten Drehknopf 5. Es ist in Fig. 2 dargestellt, daß der Drehknopf 5 und das Kurvenrad 14 direkt miteinander verbunden sind und daß jeder Stellhebel 10, 11 mittels zweier Lagerzapfen 15, 16 im Grundkörper 3 gelagert und als zweiarmiger Hebel ausgeführt ist und mit einem Hebelarm 17, 18 innerhalb einer Schwenkebene E in auf der Vorderseite und der Rückseite des Kurvenrades 14 bestehende Raumkurven 20, 21 eingreift. Die Verbindung zwischen Hebelarm 17, 18, 19 und Raumkurve 20, 21, 22 erfolgt über ein tonnen- bzw. kugelförmiges Führungselement 23, das mit eine Führungsnut bildenden radialen Begrenzungswänden 24, 25 der Raumkurve 20, 21, 22 zusammenwirkt, wie später im Zusammenhang mit Fig. 6 noch erläutert wird.

Fig. 3 und Fig. 4 zeigen Ansichten des Kurvenrades 13 des linken Drehknopfes 6, bei dem die Raumkurve 22 für eine 3/4-Kreisverstellung vorgesehen ist, und des Kurvenrades 14 des rechten Drehknopfes 5, bei dem die Raumkurven 20, 21 für eine Vollkreisverstellung vorgesehen sind und dabei gleichzeitig zwei Bowdenzüge verstellen.

Fig. 5 zeigt einen Schnitt durch die Bedieneinheit 1 über die Drehmitten der Drehknöpfe 5, 6 und ermöglicht Einsichten in den Grundkörper 3, so daß die Wirkweise der Stellhebel 10, 11, 12 in bezug auf die Verstellung der Bowdenzüge 7, 8, 9 erkennbar ist.

Bei einer Drehung, z. B. des rechten Drehknopfes 5 und damit auch des Kurvenrades 14, werden die Führungselemente 23 innerhalb der Raumkurven 20, 21 nach außen in die gestrichelte Position geführt, wodurch die Stellhebel 10, 11 ebenfalls in die gestrichelte Position verstellt werden und die Bowdenzüge 8, 9 dabei herausgezogen werden. Bei Drehung des linken Drehknopfes 6, der mit dem Kurvenrad 13 zusammenwirkt und lediglich die Raumkurve 22 aufweist, erfolgt eine sinngemäße Verstellung des Stellhebels 12. Die mit den Bowdenzügen verbundenen, nicht dargestellten Schaltklappen werden dadurch in die gewünschte Stellung bewegt, die durch die aus Fig. 1 ersichtlichen Symbole angezeigt wird.

Fig. 6 zeigt eine vereinfachte schematische Darstellung der rechten Ansicht der Fig. 5, aus der erkennbar ist, daß das Führungselement 23 drehbar auf einem Lagerzapfen 26 der Stellhebel 10, 11 aufgesetzt und durch eine axiale Begrenzungswand 27 der Raumkurve 20, 21 gesichert ist und daß das Kurvenrad 14 ausgehend von beiden Stirnflächen jeweils die Raumkurven 20, 21 aufweist, in die jeweils die Stellhebel 10, 11 mit dem Führungselement 23 eingreifen.

Die als Führungsnuten ausgebildeten Raumkurven 20, 21 bewirken mit ihren radial zu den Drehmitten der Kurvenräder 13, 14 angeordneten, jeweils parallel zueinander bestehenden Begrenzungswänden 24, 25 die Führung und Schwenkbewegung der in den Lagerzapfen 15 und 16 gelagerten Stellhebel 10, 11, 12. Die Schwenkbewegung wird dadurch ermöglicht, daß diese Stellhebel 10, 11, 12 als zweiarmige Hebel ausgebildet sind und jeweils die Raumkurven 20, 21, 22 mit einer axialen Begrenzungswand 27 in axialer Richtung der Kurvenräder 13, 14 gewölbt sind, so daß sich der freie Abstand zwischen den Lagerzapfen 15, 16 bzw. der zwischen den Lagerzapfen 15, 16 bestehenden Drehmitte der Stellhebel 10, 11, 12 und dem jeweiligen Eingriffspunkt des Führungselements 23 in der Raumkurve 20, 21, 22 fortlaufend entsprechend der Schwenkbewegung der Stellhebel 10, 11, 12 in der Schwenkebene E ändert.

Es ist vorgesehen, daß der mit Raumkurve 21 zusammenwirkende Stellhebel 11 einen das Kurvenrad 14 umgreifenden zwischen Kurvenrad 14 und Frontplatte 4 befindlichen Sichelansatz 28 aufweist, der an seinem äußeren Ende das Führungselement 23 trägt, wobei der Stellhebel 11 bei Verstellung in eine Ausnehmung 29 (Fig. 2) des anderen Stellhebels 10 hineinwandert.

Wie aus der Fig. 4 ersichtlich, sind die Raumkurven 20, 21 des Kurvenrades 14 geschlossen ausgeführt, womit der Drehknopf 5 und damit auch das Kurvenrad 14 durchdrehbar ist, d.h. ohne Rückstellung in jede beliebige Stellung gestellt werden kann.

Dadurch, daß die Drehknopf- und Kurvenradanordnung eine Mittelausnehmung 30 aufweist, in der eine Leuchtdiode 31 angeordnet ist, die mit einer Lichtleiteranordnung 32 des Drehknopfes 5, 6 bzw. der Frontplatte 4 zusammenwirkt, kann die erwähnte Symbolik 33 auf der Frontplatte 4 durch Ausleuchtung besser sichtbar gemacht werden.

Die erfindungsgemäße Bedieneinheit ist derart gestaltet, daß es bei weniger Platzbedarf einfacher und billiger herstellbar ist und eine verbesserte Funktion aufweist.
Es eignet sich daher für den Einsatz in Kraftfahrzeuge.

## Patentansprüche

1. Bedieneinheit zum Einstellen von Heizungs-, Klima- und/oder Lüftungsanlagen in Kraftfahrzeugen, bestehend aus einem in ein Armaturenbrett (2) einsetzbaren Grundkörper (3) mit einer Frontplatte (4), in der ein oder mehrere Drehknöpfe (5, 6) gelagert sind, deren Drehung eine Verstellung von mit Bowdenzügen (7, 8, 9) verbundenen Stellhebeln (10, 11, 12) bewirkt, wobei jeder Stellhebel (10, 11, 12) im Grundkörper (3) drehbar gelagert und mit einem Führungszapfen (23) in einer Führungsnut eines Kurvenrades (13, 14) geführt ist, wobei die Drehknöpfe (5, 6) und die Kurvenräder (13, 14) miteinander verbunden sind und jeder Stellhebel (10, 11, 12) als zweiarmiger Hebel ausgeführt ist, wobei der eine Hebelarm (17, 18, 19) in der Führungsnut mittels eines tonnen- bzw. kugelförmigen Führungselementes (23) geführt ist, **dadurch gekennzeichnet, dass** jeder Stellhebel (10, 11, 12) mittels zweier Lagerzapfen (15, 16) im Verbindungspunkt der beiden Hebelarme im Grundkörper (3) gelagert ist und dass jeder der einen Hebelarme (17, 18, 19) an einem Ende innerhalb einer Schwenkebene E in einer separaten Raumkurve (20, 21, 22) des Kurvenrades (13, 14) geführt ist.

2. Bedieneinheit nach Anspruch 1, **dadurch gekennzeichnet, dass** das Führungselement (23) drehbar auf einem Lagerzapfen (26) des Stellhebeis (10, 11,12) aufgesetzt und durch eine axiale Begrenzungswand (27) der Raumkurve (20, 21, 22) gesichert ist.

3. Bedieneinheit nach Anspruch 1 oder 2, **dadurch gekennzeichnet, dass** das Kurvenrad (14) ausgehend von beiden Stirnflächen jeweils eine Raumkurve (20, 21) aufweist, in die jeweils ein Stellhebel (10, 11) eingreift.

4. Bedieneinheit nach Anspruch 3, **dadurch gekennzeichnet, daß** der mit Raumkurve (21) zwischen Kurvenrad (14) und Frontplatte (4) zusammenwirkende Stellhebel (11) einen das Kurvenrad (14) umgreifenden Sichelansatz (28) aufweist, der an seinem äußeren Ende das Führungselement (23) trägt.

5. Bedieneinheit nach Anspruch 4, **dadurch gekennzeichnet, daß** der Stellhebel (11) mit Sichelansatz (28) bei Verstellung in eine Ausnehmung (29) des anderen Stellhebels (10) hineinwandert.

6. Bedieneinheit nach einem der vorstehenden Ansprüche, **dadurch gekennzeichnet, daß** die Raumkurve (22) des Kurvenrades (13) mit einer Kurve und/oder die Raumkurven (20, 21) des Kurvenrades (14) mit zwei Kurven geschlossen sind.

7. Bedieneinheit nach einem der vorstehenden Ansprüche, **dadurch gekennzeichnet, daß** das Kurvenrad (13, 14) eine Mittelausnehmung (30) aufweist, in der eine Leuchtdiode (31) angeordnet ist, die mit einer Lichtleiteranordnung (32) des Drehknopfes (5, 6) bzw. der Frontplatte (4) zusammenwirkt.

## Claims

1. Control unit for adjusting heating, air-conditioning and/or ventilation systems in motor vehicles, comprising a base body (3) which can be inserted into a dashboard (2) and has a front panel (4) in which one or more rotary knobs (5, 6) are mounted which, when they are turned, move actuating levers (10, 11, 12) which are connected to Bowden cables (7, 8, 9), each actuating lever (10, 11, 12) being mounted in the base body (3) such that it can rotate and being guided in a guide groove of a cam wheel (13, 14) by a guide pin (23), the rotary knobs (5, 6) and the cam wheels (13, 14) being connected to one another and each actuating lever (10, 11, 12) being designed as a two-armed lever, with one lever arm (17, 18, 19) being guided in the guide groove by means of a barrel- or ball-like guide element (23), **characterized in that** each actuating lever (10, 11, 12) is mounted in the base body (3) at the point of connection of the two lever arms by means of two bearing pins (15, 16), and **in that** one end of each of the lever arms (17, 18, 19) is guided within a pivoting plane E in a separate three-dimensional curve (20, 21, 22) of the cam wheel (13, 14).

2. Control unit according to Claim 1, **characterized in that** the guide element (23) is placed on a bearing pin (26) of the actuating lever (10, 11, 12) such that it can rotate, and is secured by an axial boundary wall (27) of the three-dimensional curve (20, 21, 22).

3. Control unit according to Claim 1 or 2, **characterized in that** the cam wheel (14) has a three-dimensional curve (20, 21) starting from each of the two end faces, and an actuating lever (10, 11) engages into each of these curves.

4. Control unit according to Claim 3, **characterized in that** the actuating lever (11), which interacts with the three-dimensional curve (21) between the cam wheel (14) and the front panel (4), has a sickle-like projection (28) which surrounds the cam wheel (14) and has the guide element (23) fitted to its outer end.

5. Control unit according to Claim 4, **characterized in that** the actuating lever (11) having a sickle-like projection (28) enters a recess (29) in the other actuating lever (10) when it is moved.

6. Control unit according to one of the preceding claims, **characterized in that** the three-dimensional curve (22) of the cam wheel (13) having one curve and/or the three-dimensional curves (20, 21) of the cam wheel (14) having two curves are/is closed.

7. Control unit according to one of the preceding claims, **characterized in that** the cam wheel (13, 14) has a central recess (30) which contains a light-emitting diode (31) which interacts with a light-guiding arrangement (32) of the rotary knob (5, 6) or of the front panel (4).

## Revendications

1. Unité de commande pour le réglage d'installations de chauffage, de climatisation et/ou de ventilation dans des véhicules automobiles, se composant d'un corps de base (3) pouvant être inséré dans un tableau de bord (2), avec une plaque frontale (4), dans laquelle sont montés un ou plusieurs boutons tournants (5, 6), dont la rotation produit un réglage de leviers de commande (10, 11, 12) raccordés à des câbles Bowden (7, 8, 9), chaque levier de commande (10, 11, 12) étant monté à rotation dans le corps de base (3) et étant guidé avec un tourillon de guidage (23) dans une rainure de guidage d'une roue à came (13, 14), les boutons tournants (5, 6) et les roues à cames (13, 14) étant raccordés les uns aux autres et chaque levier de commande (10, 11, 12) étant réalisé sous forme de levier à deux bras, l'un des bras de levier (17, 18, 19) étant guidé dans la rainure de guidage au moyen d'un élément de guidage (23) en forme de tonneau ou de bille, **caractérisée en ce que** chaque levier de commande (10, 11, 12) est monté au moyen de deux tourillons (15, 16) dans le point de connexion des deux bras de levier dans le corps de base (3) et **en ce que** chacun de l'un des bras de levier (17, 18, 19) est guidé à une extrémité à l'intérieur d'un plan de pivotement E dans une rainure à came spatiale séparée (20, 21, 22) de la roue à came (13, 14).

2. Unité de commande selon la revendication 1, **caractérisée en ce que** l'élément de guidage (23) est placé de manière à pouvoir tourner sur un tourillon (26) du levier de commande (10, 11, 12) et est fixé par une paroi de limitation axiale (27) de la rainure à came spatiale (20, 21, 22).

3. Unité de commande selon la revendication 1 ou 2, **caractérisée en ce que** la roue à came (14) présente, partant des deux faces frontales, à chaque fois une rainure à came spatiale (20, 21) dans laquelle vient en prise à chaque fois un levier de commande (10, 11).

4. Unité de commande selon la revendication 3, **caractérisée en ce que** le levier de commande (11) coopérant avec la rainure à came spatiale (21) entre la roue à came (14) et la plaque frontale (4) présente une saillie en forme de croissant (28) venant en prise autour de la roue à came (14), qui porte à son extrémité extérieure l'élément de guidage (23).

5. Unité de commande selon la revendication 4, **caractérisée en ce que** le levier de commande (11) avec la saillie en forme de croissant (28) progresse vers l'intérieur lors dû déplacement dans un évidement (29) de l'autre levier de commande (10).

6. Unité de commande selon l'une quelconque des revendications précédentes, **caractérisée en ce que** la rainure à came spatiale (22) de la roue à came (13) est fermée par une came et/ou les rainures à came spatiales (20, 21) de la roue à came (14) sont fermées par deux cames.

7. Unité de commande selon l'une quelconque des revendications précédentes, **caractérisée en ce que** la roue à came (13, 14) présente un évidement central (30) dans lequel est disposée une diode luminescente (31) qui coopère avec un agencement de guide de lumière (32) du bouton tournant (5, 6) ou de la plaque frontale (4).
